# EUROPEAN PATENT APPLICATION

(11) **EP 4 811 053 A1**
(43) Date of publication of application: **23.09.2026**
(21) Application number: 24890032.6
(22) Date of filing: 27.05.2024
(51) Int. Cl.: G05B 19/042

(54) **CONTROL DEVICE, CONTROL SYSTEM, AND VEHICLE**

(30) Priority: 17.11.2023 CN 202323123502 U
(71) Applicant: BYD Company Limited, Shenzhen, Guangdong 518118 (CN)
(72) Inventor: MA, Ruimao, Shenzhen, Guangdong 518118 (CN); CHEN, Xuchu, Shenzhen, Guangdong 518118 (CN); QIN, Yaoxuan, Shenzhen, Guangdong 518118 (CN); HE, Yuan, Shenzhen, Guangdong 518118 (CN); LI, Yixing, Shenzhen, Guangdong 518118 (CN)
(74) Representative: Mathys & Squire
(86) International application number: PCT/CN2024/095442
(87) International publication number: WO 2025/102661

(57) **Abstract**

A control apparatus, a control system, and a vehicle are provided. The control apparatus includes an operation unit and a controller. The operation unit is configured to input a control signal, the controller is connected to the operation unit, and the controller is configured to: receive the control signal from the operation unit, and generate a control instruction to send the control instruction to an antenna. The control instruction may be transmitted to a controlled apparatus through the antenna, and the antenna and the operation unit are separately provided.

## Description

This application claims priority to Chinese Patent Application No. 202323123502.7, filed with the China National Intellectual Property Administration on November 17, 2023 and entitled "CONTROL APPARATUS, CONTROL SYSTEM, AND VEHICLE", which is incorporated herein by reference in its entirety.

### TECHNICAL FIELD

The present disclosure relates to the field of control apparatuses, and in particular, to a control apparatus, a control system, and a vehicle.

### BACKGROUND

With development of controlled apparatuses whose motion can be controlled, for example, an uncrewed aerial vehicle, people may control motion of the controlled apparatus by using a control apparatus. However, because an antenna that receives a signal of the controlled apparatus is integrated into the control apparatus, when people control the controlled apparatus indoors (for example, in a vehicle), a physical barrier exists between the control apparatus and the controlled apparatus. As a result, signal transmission between the control apparatus and the controlled apparatus is attenuated, affecting a controllable movement distance of the controlled apparatus.

### SUMMARY

To address this, the present disclosure provides a control apparatus, a control system, and a vehicle, to resolve the foregoing technical problems.

A first aspect of the present disclosure provides a control apparatus, including an operation unit and a controller. The operation unit is configured to input a control signal, the controller is connected to the operation unit, and the controller is configured to: receive the control signal from the operation unit, and generate a control instruction to send the control instruction to an antenna. The control instruction is configured to be transmitted to a controlled apparatus through the antenna, and the antenna and the operation unit are separately provided.

In a possible embodiment, the controller is in wireless communication connection to the operation unit.

In a possible embodiment, the controller and the operation unit are separately provided.

In a possible embodiment, the controller and the operation unit are integrated, and the controller and the antenna are separately provided.

In a possible embodiment, the operation unit is one or a combination of the following: a remote sensing handle, a physical key, and a soft key.

In a possible embodiment, the controller is further configured to connect to a display apparatus. The display apparatus is configured to display an image of the controlled apparatus that is transmitted by the antenna.

A second aspect of the present disclosure provides a control system, including an antenna and the foregoing control apparatus. The antenna is connected to the controller, the antenna is configured to: receive the control instruction sent by the controller, and send the control instruction to the controlled apparatus, and the antenna and the operation unit are separately provided.

In a possible embodiment, the control system further includes a display apparatus, the display apparatus includes a button, the button generates an image request signal when being operated, and the controller is further configured to: receive the image request signal, and send the image request signal to the controlled apparatus through the antenna, to obtain image data in the controlled apparatus.

In a possible embodiment, the control system further includes a host, the host is connected to the controller and the display apparatus, the host is configured to forward the received image data sent by the controller to the display apparatus for display, and the antenna is further configured to: receive the image data sent by the controlled apparatus, and transmit the image data to the controller.

A third aspect of the present disclosure provides a vehicle. The vehicle includes the foregoing control apparatus, or includes the foregoing control system.

In a possible embodiment, the operation unit is provided inside the vehicle, and the antenna is provided outside the vehicle.

In a possible embodiment, the antenna is located on a top of the vehicle.

In a possible embodiment, the antenna includes a plurality of antenna bodies.

In a possible embodiment, the operation unit is located in a preset range outside the vehicle, and the operation unit is in Bluetooth connection to the controller.

In a possible embodiment, the operation unit is configured to be placed in first space, the antenna is configured to be placed in second space, and the first space is physically isolated from the second space.

In a possible embodiment, the first space is the inside of a vehicle cabin of the vehicle, and the second space is the outside of the vehicle cabin of the vehicle.

A fourth aspect of the present disclosure provides a communication system, including a control apparatus, an antenna, and a controlled apparatus. The control apparatus includes an operation unit and a controller. The operation unit is configured to input a control signal, the controller is connected to the operation unit, and the controller is configured to: receive the control signal from the operation unit, and generate a control instruction to send the control instruction to the antenna. The antenna is connected to the controller, the antenna is configured to: receive the control instruction sent by the controller, and send the control instruction to the controlled apparatus, and the antenna and the operation unit are separately provided. The controlled apparatus is configured to receive the control instruction.

In a possible embodiment, the controller is in wireless communication connection to the operation unit.

In a possible embodiment, the controller and the operation unit are separately provided.

In a possible embodiment, the controller and the operation unit are integrated, and the controller and the antenna are separately provided.

The controller transmits the control instruction to the controlled apparatus through the antenna, and the controlled apparatus receives and responds to the control instruction. A maximum motion range of the controlled apparatus depends on the range of the received control instruction and on the quality of a wireless signal between the antenna and the controlled apparatus. In the present disclosure, the controller is connected to the operation unit, the controller receives the control signal from the operation unit, and generates the control instruction from the control signal to send the control instruction to the antenna. The control instruction may be transmitted to the controlled apparatus through the antenna. The controller is added, so that the antenna and the operation unit may be separately provided. When the operation unit is located indoors, the antenna may be provided outdoors, to avoid attenuation of a signal between the antenna and the controlled apparatus caused by a physical barrier, so that the controlled apparatus has a longer controllable movement distance.

### BRIEF DESCRIPTION OF DRAWINGS

To describe the technical solutions of the present disclosure more clearly, the following briefly describes accompanying drawings used in describing implementations. Clearly, the accompanying drawings in the following descriptions show some implementations of the present disclosure. A person of ordinary skill in the art may still derive other drawings from these accompanying drawings without creative efforts.
FIG. 1 is a block diagram of a structure of a vehicle according to some embodiments of the present disclosure;
FIG. 2 is a block diagram of a structure of a control system according to some embodiments of the present disclosure;
FIG. 3 is a block diagram of a structure of a communication system according to some embodiments of the present disclosure;
FIG. 4 is a diagram of structures of a vehicle and a controlled apparatus;
FIG. 5 is a block diagram of a structure of a vehicle according to some other embodiments of the present disclosure; and
FIG. 6 is a block diagram of a structure of a vehicle according to still some other embodiments of the present disclosure.

### DESCRIPTION OF EMBODIMENTS

The following clearly and completely describes the technical solutions in embodiments of the present disclosure with reference to accompanying drawings in embodiments of the present disclosure. The described embodiments are merely some rather than all of embodiments of the present disclosure. All other embodiments obtained by a person of ordinary skill in the art based on embodiments of the present disclosure without creative efforts shall fall within the protection scope of the present disclosure.

In the descriptions of the present disclosure, unless otherwise expressly specified and limited, the term "connection" will be understood in a broad sense. For example, the term may indicate a fixed connection, a detachable connection, or an integrated connection, may indicate a direct interconnection, an indirect interconnection through an intermediate medium, or internal communication between two elements, or may indicate a communication connection or an electrical connection. A person of ordinary skill in the art may understand specific meanings of the foregoing terms in the present disclosure based on specific situations.

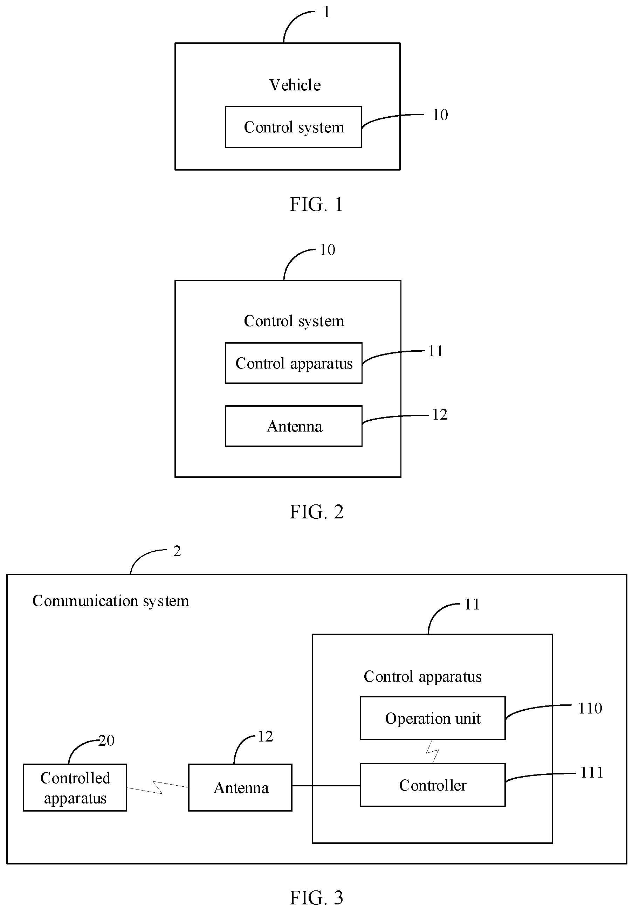

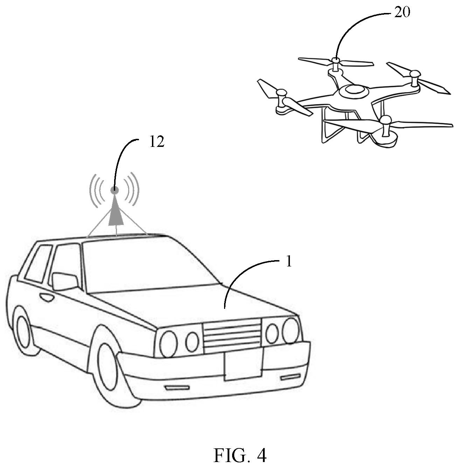

Referring to FIG. 1 to FIG. 4, FIG. 1 is a block diagram of a structure of a vehicle according to some embodiments of the present disclosure. FIG. 2 is a block diagram of a structure of a control system according to some embodiments of the present disclosure. FIG. 3 is a block diagram of a structure of a communication system according to some embodiments of the present disclosure. FIG. 4 is a diagram of structures of the vehicle and a controlled apparatus.

As shown in FIG. 1 and FIG. 4, in some embodiments, the vehicle 1 includes the control system 10. The vehicle 1 may be but is not limited to a car, an SUV, a sports car, a van, a truck, a bus, and the like.

As shown in FIG. 2 and FIG. 4, in some embodiments, the control system 10 includes a control apparatus 11 and an antenna 12.

As shown in FIG. 3, in some embodiments, the communication system 2 includes the control apparatus 11, the antenna 12, and the controlled apparatus 20. The control apparatus 11 includes an operation unit 110 and a controller 111. The operation unit 110 is configured to input a control signal. The controller 111 is connected to the operation unit 110, and the controller 111 is configured to: receive the control signal from the operation unit 110, and generate a control instruction to send the control instruction to the antenna 12. The control instruction is configured to be transmitted to the controlled apparatus 20 through the antenna 12, and the antenna 12 and the operation unit 110 are separately provided.

In some embodiments, the antenna 12 is connected to the controller 111, and the antenna 12 is configured to: receive the control instruction sent by the controller 111, and send the control instruction to the controlled apparatus 20.

The controller 111 transmits the control instruction to the controlled apparatus 20 through the antenna 12, and the controlled apparatus 20 receives and responds to the control instruction. A maximum motion range of the controlled apparatus 20 depends on the range of the received control instruction and on the quality of wireless signal between the antenna 12 and the controlled apparatus 20. In the present disclosure, the controller 111 is connected to the operation unit 110, the controller 111 receives the control signal from the operation unit 110, and generates the control instruction from the control signal to send the control instruction to the antenna 12. The control instruction may be transmitted to the controlled apparatus 20 through the antenna 12. The controller 111 is added, so that the antenna 12 and the operation unit 110 may be separately provided. When the operation unit 110 is located indoors, the antenna 12 may be provided outdoors, to avoid attenuation of a signal between the antenna 12 and the controlled apparatus 20 caused by a physical barrier, so that the controlled apparatus 20 has a longer controllable movement distance.

The physical barrier means that a signal needs to pass through some entities, for example, a metal or alloy plate material such as a vehicle body or a ship hull, a wall, or a tent.

The control instruction may be a flight direction, a flight action, or an image capturing instruction, for example, flying forward, flying backward, flying left, flying right, flying upward, flying downward, rotating, starting video recording, pausing video recording, stopping video recording, or capturing a picture.

The controlled apparatus 20 is an apparatus that can be controlled and can fly in the air, travel in water, or crawl on the ground, for example, an aircraft, a diving robot, or a crawling robot, and the aircraft includes an uncrewed aerial vehicle. In some embodiments, the controlled apparatus 20 may be used to capture a picture and/or a video. The controlled apparatus 20 may be equipped with a high-definition camera. The controlled apparatus 20 may transmit, to the controller 111 through the antenna 12, an image shot in real time. Quality of a picture and a video also depends on quality of a wireless signal between the antenna 12 and the controlled apparatus 20. Improving signal quality can avoid problems such as frame freezing of a transmitted image, and improve user experience.

The antenna 12 and the controlled apparatus 20 may communicate with each other on the same frequency band or matching frequency bands. Specifically, the frequency band may be but is not limited to a 2.4G frequency band, a 5.8G frequency band, or the like.

The controller 111 may be but is not limited to a central processing unit (CPU), a general-purpose processor, a digital signal processor (DSP), an application-specific integrated circuit (ASIC), a field programmable gate array (FPGA) or another programmable logic device, a transistor logic device, a hardware component, or any combination thereof. In some embodiments, the controller 111 is the controller 111.

The antenna 12 may be, but is not limited to, a directional antenna (receiving or sending a signal in a specific direction), an omnidirectional antenna (which can radiate or receive signals uniformly in a horizontal direction), a handheld antenna, a microstrip antenna, an antenna array (which includes a plurality of antenna elements, and directional signal radiation or reception can be achieved by adjusting phases and amplitudes of the antenna elements), or the like.

In some embodiments, the antenna 12 is a long-distance transmission antenna. Therefore, the controlled apparatus 20 has a longer controllable movement distance.

In some embodiments, the controller 111 is in wireless communication connection to the operation unit 110.

The wireless communication may be but is not limited to radio communication (a way in which information is transmitted by using a radio wave), cellular communication (a service area is divided into a plurality of small areas, and each small area is provided with signal coverage and communication services by one base station, including 2G, 3G, 4G, and 5G), infrared communication (transmitting data and a signal through infrared), Bluetooth communication, Wi-Fi communication, and the like.

In this way, the controller 111 and the operation unit 110 are not bound by a line, and the operation unit 110 can move more conveniently relative to the controller 111.

In some embodiments, the controller 111 and the operation unit 110 are separately provided. In this way, the operation unit 110 can move relative to the controller 111. Therefore, when the controller 111 is fastened, the operation unit 110 is allowed to be in a movable state, thereby allowing a user to control the operation unit 110 at different spatial positions.

In some other embodiments, the controller 111 and the operation unit 110 are integrated, and the controller 111 and the antenna 12 are separately provided.

The controller 111 and the operation unit 110 are integrated, so that integration is higher. The controller 111 and the antenna 12 are separately provided, and the antenna 12 and the operation unit 110 are separately provided. Therefore, the antenna 12 and the operation unit 110 may be located in different spaces. In this way, the antenna 12 may be allowed to be located at a position without a physical barrier during communication with the controlled apparatus 20.

In some embodiments, the operation unit 110 is one or a combination of the following: a remote sensing handle, a physical key, and a soft key. The soft key is a virtual key displayed on an electronic device or a computer interface, instead of an actual physical key. The soft key usually appears on a screen in the form of an icon, a button, or a text, and can be operated through a touchscreen, a mouse, a keyboard, or another input device. Appearance and function of the soft key can be customized and changed according to a requirement of an application or an operating system. Advantages of the soft key over the physical key are flexibility and customizability of the soft key. The soft key can be re-arranged and reconfigured as required, to adapt to different user interfaces and interaction modes. In addition, the soft key may further provide more function options and interactive feedback, for example, touch and hold, slide, and gesture recognition.

In conclusion, the soft key is a virtual and customizable key, and is displayed on the screen to implement an interaction operation of the user interface.

In some embodiments, the operation unit 110 is configured to be placed in a first space, the antenna 12 is configured to be placed in a second space, and the first space is physically isolated from the second space.

The operation unit 110 and the antenna 12 are placed in different spaces. For example, the operation unit 110 is located inside the vehicle, and the antenna 12 is located outside the vehicle. In this way, signals received and sent between the antenna 12 and the controlled apparatus 20 may not be attenuated due to a physical barrier between the antenna 12 and the controlled apparatus 20.

The physical isolation means that isolation is performed by using an entity, for example, a metal plate material, an alloy plate material, a plate material of another material, or a wall. Physical isolation between the first space and the second space means that an entity is provided between the first space and the second space for isolation.

In some embodiments, the first space is the inside of a vehicle cabin of the vehicle, and the second space is the outside the vehicle cabin.

In some other embodiments, the operation unit 110 and the antenna 12 may alternatively be located in the same space. In the space, there is no physical isolation between the antenna 12 and the controlled apparatus 20.

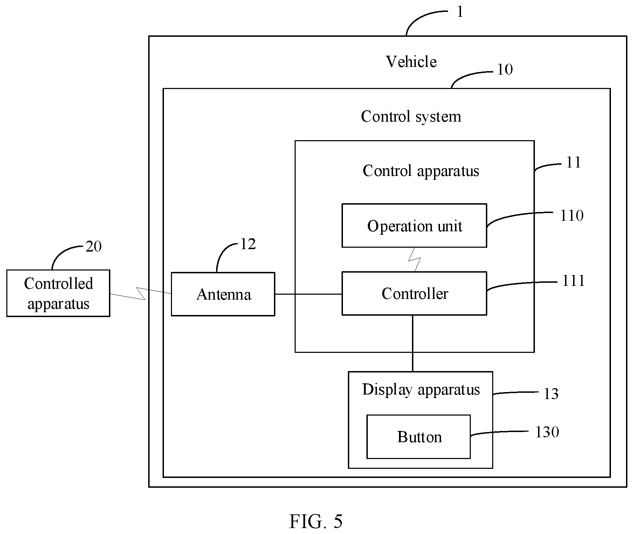

Referring to FIG. 5, FIG. 5 is a block diagram of a structure of a vehicle according to some other embodiments of the present disclosure.

In some embodiments, as shown in FIG. 5, the controller 111 is further configured to connect to a display apparatus 13. The display apparatus 13 is configured to display an image of the controlled apparatus 20 that is transmitted by the antenna 12.

When the controlled apparatus sends a real-time image, a real-time video, or the like to the antenna 12, the display apparatus 13 may display in real time the image or the video shot by the controlled apparatus 20, so that the user observes in real time an image shot by a camera of the controlled apparatus 20, and therefore dynamically adjusts a flight direction of the controlled apparatus 20, to obtain an image from a desired angle of view.

In some other embodiments, the display apparatus 13 is used to display a status of the controlled apparatus 20 that is transmitted by the antenna 12, for example, a state of charge of the controlled apparatus 20, a height at which the controlled apparatus 20 is currently located, or a wind force currently received by the controlled apparatus 20.

As shown in FIG. 5, similar to some of the foregoing embodiments but different from them, in some other embodiments, the control system 10 further includes the display apparatus 13, the display apparatus 13 includes a button 130, and the button 130 generates an image request signal when being operated. The controller 111 is further configured to: receive the image request signal, and send the image request signal to the controlled apparatus 20 through the antenna 12, to obtain image data in the controlled apparatus 20.

Therefore, the user may operate the button 130 on the display apparatus 13, so that the controlled apparatus 20 sends an image, a video, and the like to the antenna 12, and the image, the video, and the like are transmitted to the display apparatus 13 for display.

Because the vehicle 1 is usually provided with a vehicle-mounted display apparatus, additional display apparatus does not need to be provided for display, thereby reducing costs.

The display apparatus 13 may be but is not limited to a liquid crystal display (LCD), an organic light-emitting diode (OLED) display, an array LED display (an LED display apparatus), or the like.

In some other embodiments, the display apparatus 13 may be a display apparatus provided on the operation unit 110, a display apparatus on a user terminal, or the like. When the display apparatus 13 is the display apparatus provided on the operation unit 110, after the antenna 12 receives the data sent by the controlled apparatus 20, the controller 111 may perform processing (which may be but is not limited to decoding) and then control the display apparatus 13 to display processed data. When the display apparatus 13 is the display apparatus on the user terminal, the controller 111 may directly forward the data to the display apparatus 13 for display; or the controller 111 performs processing (which may be but is not limited to decoding) and then controls the display apparatus 13 to display processed data; or the controller 111 forwards the data to the user terminal, and a processor on the user terminal processes the data and then controls the display apparatus 13 to display processed data. The user terminal may be but is not limited to a mobile phone, a tablet, a computer, or the like.

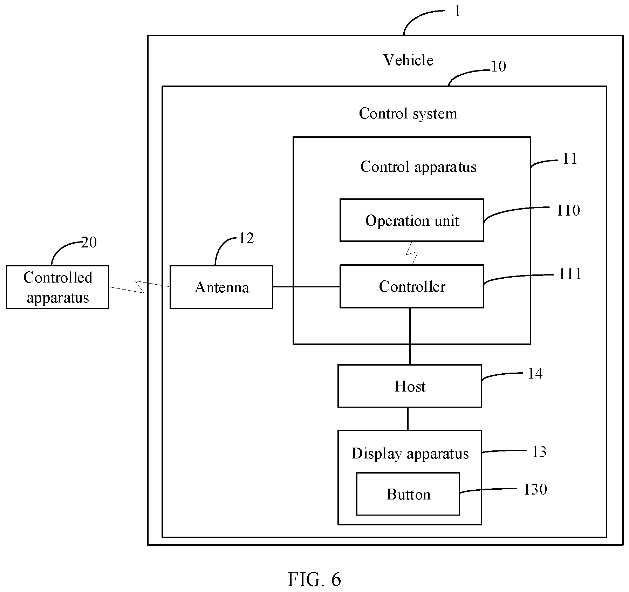

Referring to FIG. 6, FIG. 6 is a block diagram of a structure of a vehicle according to still some other embodiments of the present disclosure.

As shown in FIG. 6, similar to some of the foregoing embodiments but different from them, in still some other embodiments, the control system 10 further includes a host 14, and the host 14 is connected to the controller 111 and the display apparatus 13. The host 14 is configured to forward the received image data sent by the controller 111 to the display apparatus 13 for display. The antenna 12 is further configured to: receive the image data sent by the controlled apparatus 20, and transmit the image data to the controller 111.

In some other embodiments, the controller 111 may forward the image data received from the antenna 12 to the host 14, and the host 14 may process the image data (including but not limited to decoding and the like), and then send processed image data to the display apparatus 13 for display.

In some embodiments, the host 14 and the controller 111 may be connected through a USB data cable. In another embodiment, the host 14 and the controller 111 may alternatively be connected through another data cable.

In some embodiments, the host 14 and the display apparatus 13 may be connected through a dedicated connection line. In another embodiment, the host 14 and the display apparatus 13 may alternatively be connected through another data cable.

In some embodiments, the host 14 is located inside the vehicle 1.

In some embodiments, the antenna 12 is provided outside the vehicle 1, and the operation unit 110 is provided inside the vehicle 1.

With requirements of travel, work, and the like, more people capture pictures and/or videos by using the controlled apparatus 20 such as an uncrewed aerial vehicle. The antenna 12 is mounted outside the vehicle 1, and when the vehicle 1 travels, so that the user may sit in the vehicle and control the operation unit 110 to perform image capturing. In this way, image capturing scenes are diversified, and because there is no vehicle frame barrier between the antenna 12 and the controlled apparatus 20, signal transmission between the antenna 12 and the controlled apparatus 20 is prevented from being attenuated, so that the controlled apparatus 20 has a longer controllable movement distance.

In some embodiments, the antenna 12 is located on a top of the vehicle. In contrast to disposing the antenna 12 on a side of the vehicle and disposing the antenna 12 on the top of the vehicle, in order to prevent a signal between the antenna 12 and the controlled apparatus 20 from being attenuated due to a physical barrier, the antenna 12 needs to be provided in an open position, so as to avoid there being an obstruction around, and the signal between the antenna 12 and the controlled apparatus 20 is not shielded or obstructed. Based on a vehicle-mounted environment, the top of the vehicle is an optimal position that satisfies a condition, so that a communication signal between the antenna 12 and the controlled apparatus 20 is not blocked and affected by the vehicle's body structure.

In some embodiments, because the antenna 12 and the operation unit 110 are separately provided, the antenna 12 does not need to be bound by a size of a structure of the operation unit 110. Further, a length of the antenna 12 may be increased as required, to enhance strength of a signal sent by the antenna 12, thereby allowing the controlled apparatus 20 to have a longer controllable movement distance.

In some embodiments, because the antenna 12 and the operation unit 110 are separately provided, the antenna 12 does not need to be bound by a size of a structure of the operation unit 110. Further, the antenna 12 may be a plurality of antenna bodies. When a plurality of antenna bodies are also provided in the controlled apparatus 20, strength of signals received and sent between the antenna 12 and the controlled apparatus 20 may be higher. The plurality of antenna bodies of the antenna 12 may all be provided on the top of the vehicle 1, or some may be provided on the top of the vehicle 1, and some may be provided on the side of the vehicle 1.

In some embodiments, the controller 111 is provided inside the vehicle 1. In some other embodiments, the controller 111 is provided in a preset range outside the vehicle 1.

In some embodiments, the controller 111 and the antenna 12 may be connected through a feeder. In other embodiments, the controller 111 and the antenna 12 may alternatively be connected through another data cable.

A length of the feeder between the controller 111 and the antenna 12 needs to be minimized, to reduce signal attenuation caused by a line loss, and avoid shortening the controllable movement distance of the controlled apparatus 20.

Based on the vehicle-mounted environment, if the controller 111 and the antenna 12 are provided on the top of the vehicle, the feeder between the controller 111 and the antenna 12 is also provided on the top of the vehicle. This shortens data transmission distances between the antenna 12 and the controller 111, and may further reduce signal attenuation between the antenna 12 and the controller 111. The controller 111 is connected to the host 14 through a connection line that passes through the vehicle body. If the controller 111 is provided inside the vehicle, the controller 111 and the antenna 12 are connected through a feeder that passes through the vehicle body, and it needs to be ensured that a length of the connected feeder is sufficiently short to avoid additional line loss.

In some embodiments, the operation unit 110 is located inside the vehicle 1 or in a preset range outside the vehicle 1, and the operation unit 110 is in Bluetooth connection to the controller 111. That is, the operation unit 110 is connected to a first Bluetooth antenna (not marked), the controller 111 is connected to a second Bluetooth antenna (not marked), and when communicating with the controller 111, the operation unit 110 may send signals to and receive signals from the second Bluetooth antenna through the first Bluetooth antenna.

When the operation unit 110 is in Bluetooth connection to the controller 111, that the operation unit 110 is located in the preset range outside the vehicle 1 means a range in which the operation unit 110 can communicate with a Bluetooth antenna in the vehicle 1.

In some embodiments, the operation unit 110 and the first Bluetooth antenna may be connected through a feeder, and the controller 111 and the second Bluetooth antenna may also be connected through a feeder.

The operation unit 110 is in Bluetooth connection to the controller 111, so that an experience scenario of usage at any location in the vehicle in a vehicle-mounted environment can be met. Because the Bluetooth antenna is provided in the vehicle 1, the controller 111 may be connected to the Bluetooth antenna in the vehicle 1, and therefore, an additional Bluetooth antenna does not need to be provided. This can save more costs, and Bluetooth transmission has high signal stability and better communication effect in short-distance communication.

In another embodiment, the operation unit 110 and the controller 111 may alternatively communicate with each other in another wireless way or in a wired way, for example, communicate with each other through USB cable connection or through specific remote control cable connection.

The foregoing descriptions are implementations of embodiments of the present disclosure. It will be noted that a person of ordinary skill in the art may make some improvements and polishing without departing from the principles of embodiments of the present disclosure. These improvements and polishing shall fall within the protection scope of the present disclosure.

## Claims

1. A control apparatus (11), comprising:
an operation unit (110), configured to input a control signal; and
a controller (111), wherein the controller (111) is connected to the operation unit (110), and the controller (111) is configured to: receive the control signal from the operation unit (110), and generate a control instruction to send the control instruction to an antenna (12); and
the control instruction is configured to be transmitted to a controlled apparatus (20) through the antenna (12), and the antenna (12) and the operation unit (110) are separately provided.

2. The control apparatus (11) according to claim 1, wherein the controller (111) is in wireless communication connection to the operation unit (110).

3. The control apparatus (11) according to claim 1, wherein the controller (111) and the operation unit (110) are separately provided.

4. The control apparatus (11) according to claim 1, wherein the controller (111) and the operation unit (110) are integrated, and the controller (111) and the antenna (12) are separately provided.

5. The control apparatus (11) according to claim 1, wherein the operation unit (110) is one or a combination of the following:
a remote sensing handle, a physical key, and a soft key.

6. The control apparatus (11) according to any one of claims 1 to 5, wherein the controller (111) is further configured to connect to a display apparatus (13), the display apparatus (13) is configured to display an image of the controlled apparatus (20) that is transmitted by the antenna (12).

7. A control system (10), comprising:
the control apparatus (11) according to any one of claims 1 to 6; and
an antenna (12), wherein the antenna (12) is connected to the controller (111), the antenna (12) is configured to: receive the control instruction sent by the controller (111), and send the control instruction to the controlled apparatus (20), and the antenna (12) and the operation unit (110) are separately provided.

8. The control system (10) according to claim 7, further comprising:
a display apparatus (13), wherein the display apparatus (13) comprises a button (130), the button (130) generates an image request signal when being operated, and the controller (111) is further configured to: receive the image request signal, and send the image request signal to the controlled apparatus (20) through the antenna (12), to obtain image data in the controlled apparatus (20).

9. The control system (10) according to claim 8, further comprising:
a host (14), wherein the host (14) is connected to the controller (111) and the display apparatus (13), the host (14) is configured to forward the received image data sent by the controller (111) to the display apparatus (13) for display, and the antenna (12) is further configured to: receive the image data sent by the controlled apparatus (20), and transmit the image data to the controller (111).

10. A vehicle (1), wherein the vehicle (1) comprises the control apparatus (11) according to any one of claims 1 to 6, or comprises the control system (10) according to any one of claims 7 to 9.

11. The vehicle (1) according to claim 10, wherein the operation unit (110) is provided inside the vehicle (1), and the antenna (12) is provided outside the vehicle (1).

12. The vehicle (1) according to claim 11, wherein the antenna (12) is located on a top of the vehicle (1).

13. The vehicle (1) according to claim 12, wherein the antenna (12) comprises a plurality of antenna bodies.

14. The vehicle (1) according to claim 10, wherein the operation unit (110) is located in a preset range outside the vehicle (1), and the operation unit (110) is in Bluetooth connection to the controller (111).

15. The vehicle (1) according to any one of claims 10 to 14, wherein the operation unit (110) is configured to be placed in first space, the antenna (12) is configured to be placed in second space, and the first space is physically isolated from the second space.

16. The vehicle (1) according to claim 15, wherein the first space is the inside of a vehicle cabin of the vehicle (1), and the second space is the outside of the vehicle cabin of the vehicle (1).

17. A communication system (2), comprising:
a control apparatus (11), comprising:
an operation unit (110), configured to input a control signal; and
a controller (111), wherein the controller (111) is connected to the operation unit (110), and the controller (111) is configured to: receive the control signal from the operation unit (110), and generate a control instruction to send the control instruction to an antenna (12); and
the antenna (12) is connected to the controller (111), the antenna (12) is configured to: receive the control instruction sent by the controller (111), and send the control instruction to a controlled apparatus (20), and the antenna (12) and the operation unit (110) are separately provided; and
the controlled apparatus (20), configured to receive the control instruction.

18. The communication system (2) according to claim 17, wherein the controller (111) is in wireless communication connection to the operation unit (110).

19. The communication system (2) according to claim 17, wherein the controller (111) and the operation unit (110) are separately provided.

20. The communication system (2) according to claim 17, wherein the controller (111) and the operation unit (110) are integrated, and the controller (111) and the antenna (12) are separately provided.
